(19) Europäisches Patentamt
European Patent Office
Office européen des brevets

(11) Publication number: **0 058 468**
**A1**

(12) **EUROPEAN PATENT APPLICATION**

(21) Application number: 82300221.7

(22) Date of filing: 15.01.82

(51) Int. Cl.$^3$: **C 22 B 3/00**

(30) Priority: 06.02.81 GB 8103697

(43) Date of publication of application: 25.08.82 Bulletin 82/34

(84) Designated Contracting States: DE FR GB IT NL

(71) Applicant: LONDON & SCANDINAVIAN METALLURGICAL CO LIMITED
45 Wimbledon Hill Road
London, SW19 7LZ(GB)

(72) Inventor: Giwa, Cyril Olakunle
30 Dart Road Cove
Farnborough Hampshire(GB)

(72) Inventor: Hudson, Michael James
18 Cypress Road
Woodley Reading RG5 4BD(GB)

(74) Representative: Oliver, Roy Edward et al,
POLLAK,MERCER & TENCH High Holborn House 52-54
High Holborn
London WC1V 6RY(GB)

(54) **Selective extraction agents.**

(57) Aliphatic, aromatic and heterocyclic esters of derivatives of dithiocarbamic acid and polymeric forms thereof have affinity for certain monovalent and multivalent metal ions and form elutable complexes. The compounds can thus be used to extract the metals from solution, if necessary by selective extraction when the solution contains other metal ions which do not form complexes with the extraction agents.

EP 0 058 468 A1

SELECTIVE EXTRACTION AGENTS

DESCRIPTION

The invention relates to the extraction of metal ions from solutions and is concerned in particular with selective extraction agents, their use in the selective extraction of metals from solutions and methods of recovery of the extracted metal or metals from the extraction agents. The invention provides extractants which can selectively extract a single metal from a solution containing two or more metals and which also allow the single metal to be recovered, so that the desired metal can be separated from the extractant and thus selectively separated from the solution. It also provides extractants which can be simultaneously loaded with two or more metals, including extractants which permit selective stripping of one of the two or more metals by the later use of suitable stripping agents.

A number of polymers useful for the extraction of metal ions from solutions are known. One group of such polymers is based upon poly(ethylenedithiocarbamic acid), also known as poly(iminoethenedithiocarboxylic acid) and poly/N̄-(dithiocarboxylato)iminoethylenehydrogeniminioethylene/, and its salts. The latter can be prepared by reacting poly(ethyleneimine) with carbon disulphide in the presence of a base, according to the following:

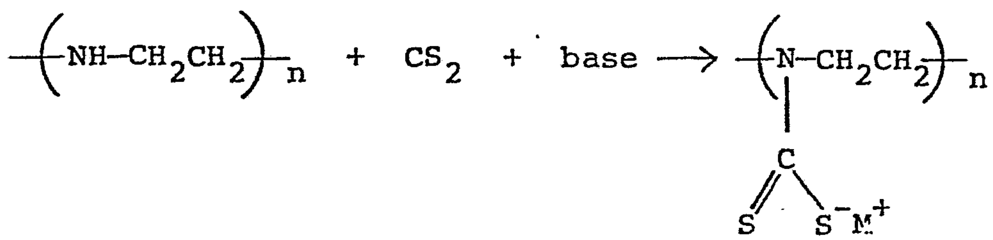 (1)

This preparation is described by M Okawara and T Nakai, Bull. Tokyo Inst. Technol., 78 (1966), while essentially the same reaction, carried out in the absence of a base (other than the ethyleneimine polymer itself) is disclosed by J H Barnes and G F Esslemont, "Die Makromolekulare Chemie", 177, 307-310, (1976).

The acid and its salts, which are referred to below for convenience as PEDTC, are particularly effective in extracting silver, producing a silver-loaded polymer which can contain up to 80 wt.% silver. However, the loading of the polymer, whether with silver or with other metals, is irreversible, so that the silver or other metal(s) cannot then be recovered from the loaded polymer unless the polymer itself is decomposed. Such decomposition produces toxic fumes and also is wasteful, because the polymer cannot be recovered for re-use.

Other sulphur-containing polymers capable of complexing metals have been produced, e.g. "Srafion" (Regd. Trademark) which contains isothiouronium groups (cf. "Ion Exchange and Membranes, Vol. 1, 225, (1974) by S Goldstein, M Silberg and G Schmuckler). In these polymers, the sulphur-containing groups bind particularly strongly to metals and, although this bond strength assists extraction, it prevents the metals from being stripped from the polymer.

Thus, the extractants which have been available hitherto are essentially of practical use only when the metal to be extracted from solution is an impurity of

so little commercial value that its loss in the loaded extractant is acceptable. Even if the extraction process were considered, instead, as a means of recovering a valuable metal, the process would be wasteful, because the extractant could not be regenerated and re-used and would therefore be lost. The process may involve additional expense if the metal is toxic or otherwise harmful, because special precautions may have to be taken in disposing of the loaded extractant.

It has now been discovered that extraction can be performed so that is does not suffer from these disadvantages. This improved form of extraction consists in essence of using the extractants of the invention. It has been found that, after the extraction, the metal can easily be stripped from the loaded extractant, by using a wide range of stripping agents. An important advantage of this invention is that it both permits recovery of the metal and re-use of the extractant. Furthermore, the extractants of the invention are capable of showing a selective affinity for particular metals and are useful for separating one desired metal from a solution which contains two or more metals.

According to one aspect of this invention, compounds are provided which are either monomers or polymers and have the general formula:

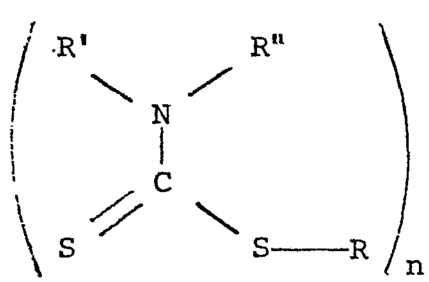

(I)

wherein:

(i) the S——R bond is covalent,

(ii) n is 1 or a number greater than 1,

(iii) R, R' and R" are the same or different and each represents an aliphatic, aromatic or heterocyclic group and R" may also represent a hydrogen atom, when n is 1, or

(iv) R, R' and R" are the same or different and each represents an aliphatic, aromatic or heterocyclic group and R" may also represent a hydrogen atom or one or more of R, R' and R" represents a multivalent group derived from such a group and R, R', R" or R'-N-R" form part of a polymer chain, when n is greater than 1.

According to another aspect of the invention, an extractant for the selective extraction of metal ions comprises a compound of monomeric or polymeric structure according to formula I as defined above or a solution of such a compound. The term "polymeric", in this disclosure, means dimeric, trimeric and so on, as well as higher molecular weight species.

It has been found that the compounds of the invention, which are related to the known products of the above equation 1 but have an organic group, R, as defined above, attached covalently to the dithiocarbamate group in place of the cation of PEDTC, can have widely varying properties, depending upon the particular organic radicals selected as the groups R, R' and R" and, also, upon whether the compounds are in monomeric or polymeric form. In general, the group R is chosen so as to provide the compound with the chemical properties desired, whilst R' and R" and, therefore, the group R'—N——R" are chosen so as to give the product the desired physical form or solubility characteristics. For example, if the compound is polymeric and this is based upon incorporation of the group R'—N——R" in a polymer chain, each of R' and R" thus being the same

or different groups derived from aliphatic, aromatic or heterocyclic groups, the polymer is usually an insoluble solid. If the group R'-N-R" is $C_4H_9$-N-$C_5H_{11}$, R' being a butyl group and R" being a pentyl group the compound can be dissolved in many organic solvents and the resultant solutions can be used for metal extraction. Each of the groups R, R' and R" may be an alkyl group, an aryl group, a heterocyclic group, a substituted alkyl group, a substituted aryl group or a substituted heterocyclic group. In addition, R" may be a hydrogen atom. R'NR" may be in a polymeric chain such as poly(ethyleneimine). The extractants may be regarded as esters of N-dithiocarbamates (DTC).

These DTC esters can be prepared by a wide range of methods. For example, the polymeric forms can be prepared:

(i) by polymerisation reactions involving monomers in which the dithiocarbamate ester group is already chemically bonded,

(ii) by direct combination of the —CS.SR group with an amino or imino polymer, e.g., by reacting poly(ethyleneimine) with $CS_2$, a base and a halide of the formula RX, or

(iii) by first preparing the corresponding dithiocarbamic acid and then esterifying it by reaction with a halide, RX, according to the following:

$$R'NR''CSSH + RX \longrightarrow R'NR''CSSR + HX. \qquad (2)$$

If the acid used in the third of these three preparation methods is poly(ethylenedithiocarbamic acid), the preferred temperature for esterification is about 40°C, and the maximum temperature is 60°C, because poly(ethylenedithiocarbamic acid) decomposes at higher temperatures.

EXAMPLE 1

Methyl Poly(ethylenedithiocarbamate)

This Example illustrates the preparation and use of a compound of the invention of the type which is a polymer, wherein the group R'-N-R" in Formula I forms part of a polymeric chain.

(a) Preparation of the polymer, which can be represented by the following formula:

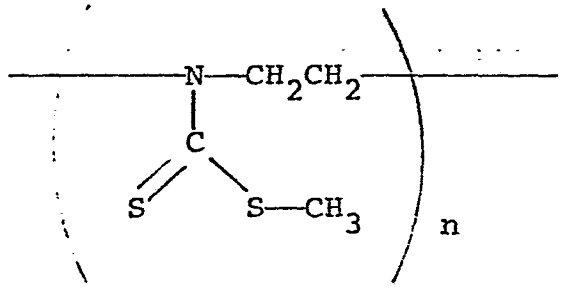

where n is greater than 1, was carried out using the esterification method (iii) mentioned above. The desired polymer was obtained as a white powder by the esterification of the sodium salt of poly(ethylene-dithiocarbamic acid) using methyl iodide.

(b) When the white powder was added to a dilute solution of $Fe^{3+}$ ions, it immediately started to turn brown and had become deep brown within 2 minutes, indicating rapid extraction of $Fe^{3+}$ ions from the solution. However, when the white powder was added to a pink dilute solution of $Co^{2+}$ ions, no colouration of the powder could be observed even after several days. Observations of the intensity of the colour of the cobalt solution, firstly before addition of the powder and secondly after the solution had stood in contact with the powder, indicated only a very slight uptake of cobalt by the powder. When the powder was added to a sample of the cobalt solution to which a few drops of the ferric solution had been added, the powder immediately turned brown, indicating that its affinity for ferric ions is not impaired by the presence of cobalt. Thus the methyl ester of

PEDTC is useful for removing unwanted iron from a cobalt-containing process stream, for example during the recovery of cobalt from hardmetal scrap or from primary sources. The very small amount of cobalt extracted with the iron does not represent a significant loss.

(c) The iron can be stripped very easily from the loaded polymer by washing it with ethylenediaminetetraacetic acid (EDTA). When the brown iron-loaded polymer in the above example is shaken with EDTA, it turns white immediately and, when it is subsequently re-used for extraction, it works as effectively as the unused polymer. The iron can be stripped by treating the polymer with oxalic acid instead of EDTA. Many other stripping agents can be used. Stripping is helped by low pH.

EXAMPLE 2

In order to effect the selective extraction of $Fe^{3+}$ and $Cu^{2+}$ from cobalt ($Co^{2+}$) sulphate residues, various samples of the latter were treated with methyl poly(ethylenedithiocarbamate), which is referred to below as PIEDE polymer from its alternative name of poly(imino-ethenedithio-carboxalate) ester. Table I below shows the results obtained; the term "trace" indicates a metal concentration < 0.01 mg/l; the first figure given for metal concentration is the initial value and the second is the final value.

TABLE I

| Sample | PIEDE polymer used (g) | | Metal concentration (mg/l) $Co^{2+}$ | $Fe^{3+}$ | $Cu^{2+}$ | $Co^{2+}$ recovered (%) |
|---|---|---|---|---|---|---|
| (1) | 2.50 | i | 360 | 40 | 5 | |
| | | ii | 346 | trace | trace | 96.0 |
| (2) | 4.51 | i | 260 | 20 | 200 | |
| | | ii | 251 | trace | 0.4 | 96.5 |
| (3) | 2.50 | i | 176.7 | 55.8 | - | |
| | | ii | 167.5 | trace | - | 94.8 |
| (4) | 1.50 | i | 176.7 | 16.7 | 32 | |
| | | ii | 167.0 | trace | 0.95 | 94.5 |

Samples used:

(1) Metallurgical solution
(2) Synthetic Zambian mining solution
(3) Synthetic solution
(4) Synthetic solution

EXAMPLE 3

After use, the PIEDE polymer of the type used in Example 2 was subjected to rejenerative elution, either with hydrochloric acid (2M) or with 0.2M EDTA, and was then used again to extract further quantities of $Fe^{3+}$ and $Cu^{2+}$ from samples such as those featured in Example 2. Metal uptake is expressed in Table II below in mg/g and the final figures are also given as percentages of the initial figures obtained.

TABLE II

| Regeneration | $Fe^{3+}$ Initial Value: 16.3 mg/g | | $Cu^{2+}$ Initial Value: 42.0 mg/g | |
|---|---|---|---|---|
| | Final Value | % | Final Value | % |
| HCl 1st | 12.0 | 73.6 | 14.3 | 34.0 |
| 2nd | 11.0 | 67.5 | 10.2 | 24.3 |
| 3rd | 11.0 | 67.5 | 9.5 | 22.6 |
| 4th | 10.1 | 62.0 | 9.0 | 21.4 |
| EDTA 1st | 2.91 | 17.8 | 4.8 | 11.4 |
| 2nd | 2.91 | 17.8 | 4.8 | 11.4 |
| 3rd | 2.11 | 12.9 | 3.3 | 7.9 |

EXAMPLE 4

Ethyl Poly(ethylenedithiocarbamate)

This Example illustrates the preparation and use of a polymer (the ethyl ester of PEDTC) which constitutes the ethyl analogue of that featured in the preceding Examples. The polymer was prepared as a white powder, by using ethyl bromide or ethyl iodide instead of methyl iodide in the method described in Example 1, heating the reactants under reflux.

Use of the polymer as an extractant for $Fe^{3+}$ and $Cu^{2+}$ in treating solutions containing either or both of them and $Co^{2+}$, of the kinds referred to in Example 2, has shown that ethyl poly(ethylenedithiocarbamate) is possibly a highly effective selective extractant for $Cu^{2+}$ though it is slightly less effective than the methyl analogue for the separation of $Fe^{3+}$ and $Co^{2+}$ ions.

The efficacy of the polymer is readily demonstrable. When the white powder was added to a dilute light-blue $Cu^{2+}$ solution, it immediately began to turn green, becoming strongly green-coloured within 2 minutes. This indicates rapid extraction of $Cu^{2+}$ ions. However, when added to a dilute pink solution of $Co^{2+}$ ions, the polymer powder showed no colouration, indicating no extraction of $Co^{2+}$ ions, after contact for as long as 2 weeks. These results show that the ethyl ester of PEDTC is useful for removing unwanted copper from a cobalt-containing process stream.

The extractants of the invention also have a strong affinity for precious metals and base metals. For example, the methyl ester of PEDTC has a strong affinity for silver and absorbs $Ag^+$ ions rapidly from solution. The silver can be stripped from the ester very easily by washing it with a solution of cyanide or thiocyanate. Thus the ester provides an easy means of recovering silver from photographic fixing solutions.

While we do not subscribe to any definite theory of the mechanisms involved in metal extraction and stripping using the compounds of the invention, the functional group is thought to be the alkyl or other dithiocarbamate group:

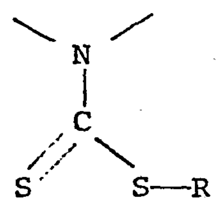

there being a covalent bond between S and R. The bond formed between the metal being extracted and the ester probably involves one but not both of the sulphur atoms. It seems most probable that the bonding is between the S in the C═S group and the metal.

Stripping may occur by either of at least two mechanisms. In strong acids, it may occur by protonation of the nitrogen atom or one of the sulphur atoms, most probably by protonation of the sulphur atom attached to R, because this sulphur atom still has lone pairs of electrons. Complexing agents,

particularly those which form chelate rings with the metal, strip because the kinetics and thermodynamics favour the stripping process.

Stripping also can be done selectively; a stripping agent can be chosen which will strip just one metal from an extractant loaded with two or more metals.

The capacity of the extractant for metals and its selectivity are altered by changing the nature of R, e.g. by choosing R to be an electron-donating group or an electron-withdrawing group, or by choosing R to be large or small. In the case of the polymer, an R group which contains an OH group, for example the $-CH_2CH_2OH$ group, enhances the hydrophilicity of the polymer, which increases the rate of extraction.

Because the number of possible choices of R in the monomeric and polymeric extractants is vast, the strength of the metal-extractant bond can be finely controlled to give chemical properties such as bond strength which are appropriate for the particular metal solution being treated. For example, in the case of a $Fe^{3+}/Co^{2+}$ solution, the choice of a methyl group produces a metal extractant bond which is strong enough to extract the $Fe^{3+}$ from solution, is barely strong enough to extract any $Co^{2+}$ from solution and is not strong enough to hinder stripping of $Fe^{3+}$ from the extractant.

Because of the $Fe^{2+}/Fe^{3+}$ equilibrium, it is not necessary to add an oxidising agent at the extraction stage, even when the iron is present predominantly as $Fe^{2+}$. It is thought that the reagent removes $Fe^{3+}$ rather than $Fe^{2+}$ from solution and, as the $Fe^{3+}$ is removed, more $Fe^{2+}$ is converted to $Fe^{3+}$, which is therefore continuously extracted.

In general, the polymeric extractants of the invention are solids which are insoluble in water and are useful for extracting metal ions from the liquid phase into the solid phase. The hydrophilicity of the extractants can be improved by adding a wetting agent such as lauryl sulphate.

However, for certain applications, liquid-liquid extraction is more suitable and, in these instances, a solution of the extractant in an organic solvent can be employed. This is done, for instance, by choosing a hydrophobic R or R'NR" group which consists of or includes a large alkyl (e.g. $C_9H_{19}$), aryl or heterocyclic group.

The utility of the extractants of the invention is not confined to the metals which have been mentioned specifically above; the extractants may be used for the extraction of a wide range of different metals. It is not necessary for the metals to be present as cations; certain of the extractants, for example the PEDTC esters, can extract molybdate ions from a solution of molybdate and tungstate ions.

It will be realised by those skilled in the art that, in those cases where the extractant is a polymer, a certain amount of cross-linking is possible, and a certain proportion of the nitrogen atoms may be bonded to a hydrogen atom instead of a CSSR group.

The invention has many features, which may be essential or optional, which distinguish and confirm that it is an improvement over the prior art; the principal ones may be summarised as follows:

(i) Extraction of metal ions by the extractant is reversible; the metal can be recovered easily from the loaded extractant;

(ii) As a result, the extractant can also be recovered for re-use and, also, can be re-used

repeatedly without deterioration of its properties;

(iii) As a further result, there is no waste to be disposed of;

(iv) Extraction of the metal with the extractant and also stripping of the metal from the extractant are processes which are both operable at atmospheric pressure and room temperature;

(v) The processes need not produce toxic fumes;

(vi) Particularly in view of (iii), (iv) and (v) above, the processes do not need specially-designed plant or equipment;

(vii) The processes of extraction and stripping are equally as effective on a small laboratory scale and on a large commercial scale;

(viii) The processes do not need special skills and may readily be carried out, provided due care and proper supervision are employed, where few or no qualified personnel are present, e.g. in school laboratories and photographic workshops;

(ix) The starting materials from which the extractants of the invention are made are cheap and widely available;

(x) The extractants of the invention are stable under normal conditions of use;

(xi) By appropriate choice of the extractant, extraction can be made selective so that just one desired metal can be extracted from a solution which contains two or more metals;

(xii) By appropriate choice of the stripping agent, stripping can be made selective so that just one desired metal can be stripped from an extractant which is loaded with two or more metals;

(xiii) The degree of cross-linking can alter the chemical and physical properties of the extractants.

CLAIMS

1. A monomeric or polymeric organic compound, capable of use in the extraction of metal ions from solutions,
characterized in
that the compound has the general formula:

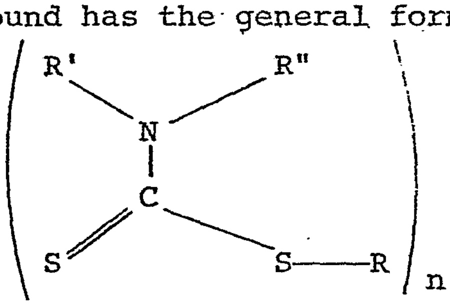

wherein:

(i) the S——R bond is covalent;

(ii) n is 1 or a number greater than 1;

(iii) R, R' and R" are the same or different and each represents an aliphatic, aromatic or heterocyclic group and R" may also represent a hydrogen atom, where n is 1, or

(iv) R, R' and R" are the same or different and each represents an aliphatic, aromatic or heterocyclic group and R" may also represent a hydrogen atom or one or more of R, R' and R" represents a multivalent group derived from such a group and R, R', R" or R'-N-R" forms part of a polymer chain, when n is greater than 1.

2. A composition of matter capable of use in the extraction of metal ions from solution,
characterized by
comprising a solution of a compound of the general formula:

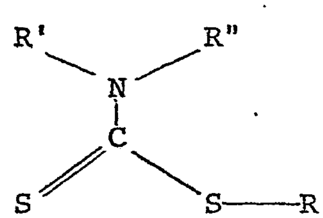

wherein the S——R bond is covalent and R, R' and R" are the same or different and each represents an aliphatic, aromatic or heterocyclic group.

3. A composition of matter capable of use in the extraction of metal ions from solution, characterized by comprising a solution of a compound of the general formula:

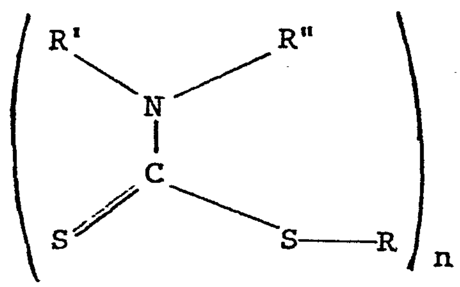

wherein:

(i) the S——R bond is covalent;

(ii) n is greater than 1; and

(iii) R, R' and R" are the same or different and each represents an aliphatic, aromatic or heterocyclic group or any one or more of R, R' and R" represent(s) a multivalent group derived from such an aliphatic, aromatic or heterocyclic group and R, R', R" or R'-N-R" forms part of a polymer chain.

4. A composition of matter capable of use in the extraction of metal ions in solution, characterized by comprising methyl poly(ethylenedithiocarbamate), ethyl poly(ethylenedithiocarbamate), a mixture thereof or a solution of either or both of such compounds.

5. A method of extraction of a metal from a solution containing ions of such metal, characterized in that a monomeric or polymeric organic compound as defined in claim 1 or a solid-state composition of

matter as defined in claim 1, 2 or 3 is added to the solution containing the metal ions and allowed to react for a time sufficient to form a complex containing the metal and the organic compound and the complex is then separated off.

6. A method according to claim 5, in which the complex is treated with a stripping agent which elutes the complexed metal and so allows the extracted metal to be recovered.

7. A method according to claim 5 or 6, in which the metal ions in the solution comprise $Fe^{3+}$ with or without $Co^{2+}$.

8. A method according to claim 6 or claims 6 and 7, in which the stripping agent is hydrochloric acid or ethylenediaminetetraacetic acid.

9. A method according to any of claims 6 to 8, in which the organic compound is recovered after the stripping step and is re-used for the extraction of further amounts of the metal.

0058468

European Patent Office

# EUROPEAN SEARCH REPORT

Application number

EP 82 30 0221.7

## DOCUMENTS CONSIDERED TO BE RELEVANT

| Category | Citation of document with indication, where appropriate, of relevant passages | Relevant to claim |
| --- | --- | --- |
| Y | FR - A - 2 080 451 (OSAKA SODA)<br>* page 34 * | 1 |
| Y | DD - A - 142 059 (W. BECHMANN et al.)<br>* page 5 * | 1 |
| A | DE - B2 - 2 434 879 (SAGAMI CHEMICAL RESEARCH CENTER) | |
| A | US - A - 4 239 865 (R. TARAO et al.) | |

CLASSIFICATION OF THE APPLICATION (Int. Cl. 3)

C 22 B 3/00

TECHNICAL FIELDS SEARCHED (Int.Cl. 3)

C 22 B 3/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
| --- | --- | --- |
| Berlin | 10-05-1982 | SUTOR |

EPO Form 1503.1 06.78